# EUROPEAN PATENT SPECIFICATION

(11) **EP 3 750 457 B1**
(45) Date of publication and mention of the grant of the patent: **06.07.2022**
(21) Application number: 19799406.4
(22) Date of filing: 08.05.2019
(51) Int. Cl.: A47G 21/18

(54) **DISPOSABLE STRAW**
EINWEG-TRINKHALM
PAILLE JETABLE

(30) Priority: 09.05.2018 KR 20180053308
(43) Date of publication of application: 16.12.2020
(73) Proprietor: Tabohout, Mustapha, Dubai (AE)
(72) Inventor: KIM, Kwang-Pil, Seoul 03119 (KR)
(74) Representative: Tzeuton Tchangoum, Eric Olivier
(86) International application number: PCT/KR2019/005486
(87) International publication number: WO 2019/216637

(56) References cited:
- EP-A1- 3 295 835
- WO-A1-2012/098448
- WO-A2-93/05668
- AU-A- 7 067 196
- AU-B2- 699 882
- CN-A- 109 942 900
- JP-A- 2008 528 152
- KR-A- 20140 065 039
- KR-A- 20150 077 916
- KR-Y1- 200 287 233

## Description

### [Technical Field]

This invention is about straws used for disposable use.

### [Technology behind the invention]

Common disposable straws are manufactured by the compression molding of plastics. Disposable straws are manufactured by compressing plastic. Disposable straws made of plastic will not readily decompose if discarded. In addition, the disposed plastics are the main cause of environmental pollution by releasing environmental hormones and pollutants during incineration.

Recently, research on eco-friendly products has been active due to the emergence of environmental issues. The above research focuses on the products which do not produce air pollution materials while disposed. For example, there is an attempt to manufacture paper on behalf of plastic, but paper straws are coated with synthetic resin to improve water resistance so not completely biodegradable.

Document WO9305668 disclosed multiple edible products based on cereals. The formulas taught by this document are mainly designed to make food packaging articles.

### [Contents of invention]

### [Challenges to Work with]

The purpose of this invention is to provide disposable straws with no waste, that is both tough and resilient; as well as transparent/translucent.

The purpose of this invention is to provide disposable straws that can enhance the taste and aroma of drinks.

### [Means of solving task]

The technical issues are not solely confined hereby and other ones not mentioned will be clearly understood by the person in charge through the explanation below.

This invention provides a disposable straw as claimed in claim 1.

Also, in one embodiment, the above rice flour may be of an Indyca variety.

Also, in one embodiment, the body may contain edible pigments of coffee or natural fruit.

The above body may be flavoured with the scent of coffee, fruit, caramel or chocolate.

In addition, in one embodiment, the above body may form an 8-character cut section perpendicular to the length direction.

Also, in one embodiment, sections perpendicular to the length direction of the above body are formed repeatedly with a recess and a groove.

The above recess and the groove can be formed along the length direction of the above body.

In addition, in one embodiment, the recess part and the groove part may be formed repeatedly in a spiral along the length direction of the above body.

In addition, in one embodiment, one or more of the two ends according to the direction of the above length may be provided with higher thickness compared to body parts.

In addition, in one embodiment, one or more of the two ends according to the direction of the above length may be provided in the condition of being folded again.

In addition, in one embodiment, additional caps may be included which are combined at one or more of the two ends according to the direction of the above length.

In addition, in one embodiment, the cap above may include the connection between the inner joint that is inserted into the inner part of the body and the outer joint that is joined to the outer circumference of the body by which the penetration hole is formed.

### [Effect of Invention]

According to one example of this invention, disposable straws do not produce any waste at all.

Also, according to example of this invention, the taste and aroma of drinking a beverage using disposable straw car'-be' increased.

### [Brief description of the Drawing]

The effects of this invention include but not limited to the described above and effects are described hereby will be clearly understood by ordinary skilled person in relevant technical areas using this specification and the attached drawings.
Drawing 1 is a perspective view showing a disposable straw in accordance with the first embodiment of this invention.
Drawing 2 is a perspective view showing the addition of color or aroma to disposable straws according to the first embodiment of this invention.
Drawing 3 shows the use status of disposable straws according to the first embodiment of this invention.
Drawing 4 is a perspective view showing a disposable straw in accordance with a second embodiment of this invention.
Drawing 5 is a cross-sectional view showing disposable straws according to a third embodiment of this invention.
Drawing 6 is a view showing the manufacture of disposable straws in accordance with a fourth embodiment of this invention.
Drawing 7 is a perspective view showing a disposable straw according to a fifth embodiment of this invention.
Drawing 8 is a perspective view showing a disposable straw according to a sixth embodiment of this invention.
Drawing 9 is a perspective view showing the cap of a disposable straw according to the seventh embodiment of this invention.

### [Details for carrying out the invention]

The following, examples of implementation of this invention are described in more detail by referring to the drawings attached. Examples of implementation of this invention may be transformed into several forms and the scope of this invention shall not be interpreted as being limited to the following examples of implementation. This example of implementation is provided to explain this invention more fully to those with average knowledge in the art. Thus, the shape of the element in the drawing is exaggerated to emphasize a clearer explanation.

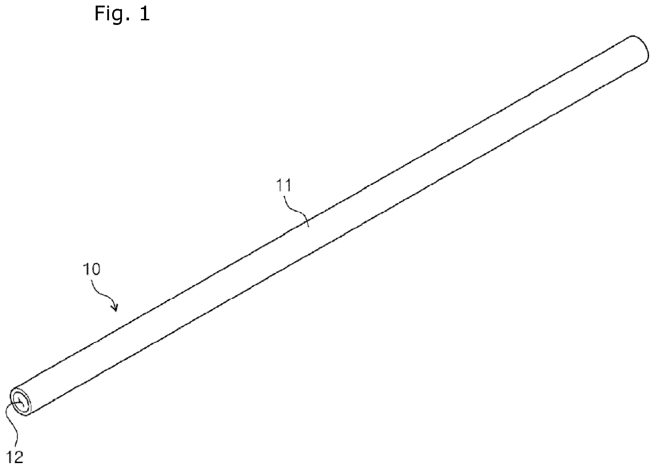

Drawing 1 is a perspective view showing a disposable straw in accordance with the first example of this invention.

A disposable straw (10) has a body (11). The body (11) is provided elongated in a longitudinal direction. An opening is formed at both ends according to the length direction of the body (11). The body (11) connects the openings at both ends to form a hole (12) that allows the drink to pass along the longitudinal direction.

The body (11) is manufactured by mixing rice flour, and tapioca starch as the main ingredient. The body comprises of 65~85 weight percent of rice flour and 15-35 weight percent of tapioca starch. For this instance, a trace amount of salt and sugar may be included. The salt and sugar enhance the strength of the straw.

Among the edible powders, it is desirable that the rice flour is an indica variety. Indica varieties of rice are those commonly referred to as short grain Vietnamese rice. It is also possible to make the straw (10) thin and hard when making rice of an Indica variety. In addition, users have less heterogeneity because they are kneaded compared to other materials and have less distinctive scents when forming.

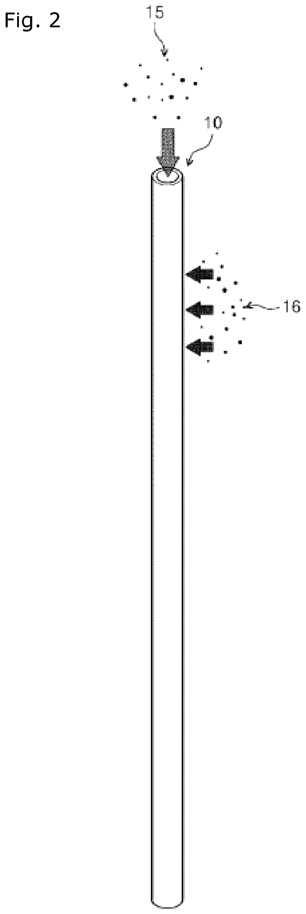

Drawing 2 is a perspective view showing the addition of color or aroma to a straw according to the first embodiment of this invention.

Drawing 2 allows the flavour (15) to be flavored according to the user's taste during or after the dough to manufacture the body (11). Flavors can be selected between coffee scents, fruit scents (e.g., mangoes, oranges, strawberries, bananas, etc.), caramel scents and chocolate scents. Scents (15) are described as attached to the inside of the straw (10), but may be attached to the outside.

It may include edible pigments (16) in the body (11) either during or after the preparation of the body (11). Pigments (16) may be applied to the surface.

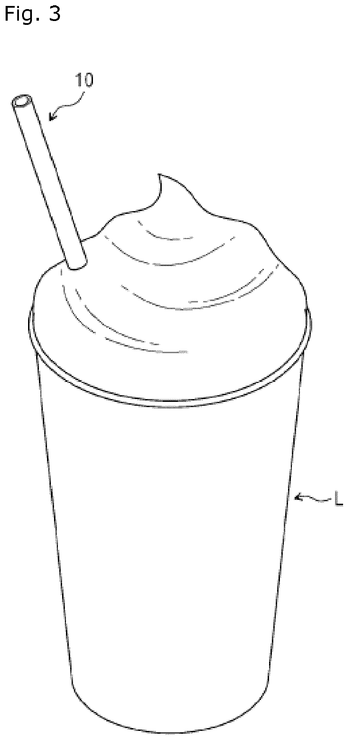

Drawing 3 shows the use status of disposable straws according to the first embodiment of this invention.

Referring to drawing 3, a straw (10) may be used to the beverage's drinking. The scent and color of the straw (10) can be selected depending on the taste and color of the drink. For example, strawberry-flavored drinks use a red strawberry-flavored straw. For mango flavored drinks, use a yellow mangoflavored straw. It is not necessarily limited to this, but by various combinations of drinks and straws, users can enjoy the combination of drinks and straws.

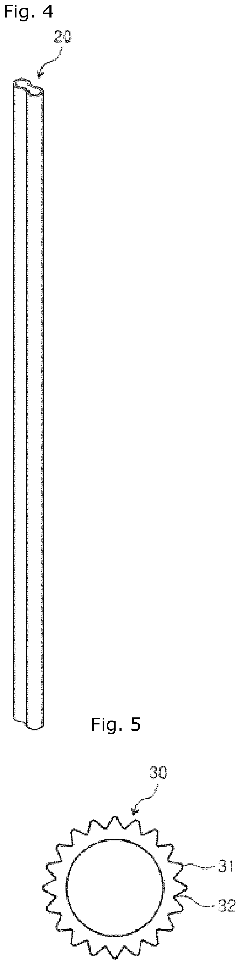

Drawing 4 is a perspective view showing a disposable straw according to the second embodiment of this invention.

Referring to drawing 4, a straw (20) is provided in the form of sip stick. The section of the straw (20) is formed in eight-character shape. The straw (20) easily stirs the drink or slowly sucks in the hot drink.

Drawing 5 is a cross-sectional view showing disposable straws according to a third implementation of this invention.

When referring to drawing 5, sections perpendicular to the length direction of a straw (30) body are formed repeatedly with a recess (31) and a groove (32). The recess (31) and the groove (32) are formed along the length direction of the body. The straw (30) can be prevented from deformation by the recess (31) and the groove (32).

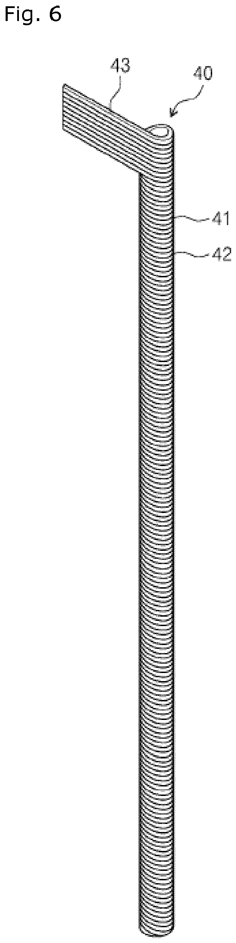

Drawing 6 is a drawing that shows the manufacture of disposable straws according to the example of the fourth implementation of this invention.

Referring to drawing 6, the straw (40) has a recess part (41) and a groove part (42) repeatedly formed in a spiral along the length direction. The manufacture is done by drying a dough (43) of a flat surface with a width of a certain amount about the center. The plane dough (43) is formed along the length direction of the recess part (41) and the groove part (42), and the recess part (41) and the groove part (42) are arranged obliquely, with the plane dough (43) in the oblique direction. A straw (40) can be prevented from deformation in form by the recess part (41) and the groove part (42).

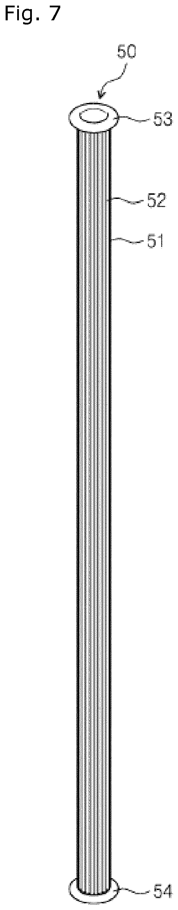

Drawing 7 is a perspective view showing a disposable straw according to the example of the fifth implementation of this invention.

Referring to drawing 7, a straw (50) provides a thicker end relative to the body at least one of the two ends (53 and 54) along the length direction. The recess (51) and the groove (52) are formed along the length direction of the body. Both ends (53 and 54) depending on the length direction of the body may be provided in the form of re-folding the ends. As the end (53 and 54) forms thicker compared to the body, it is possible to prevent deformation of the end (53, 54). For example, the ends of the straw can come into contact with each other and the opening can be closed. However, thickening the end (53, 54) can prevent closure of openings due to deformation of the straw.

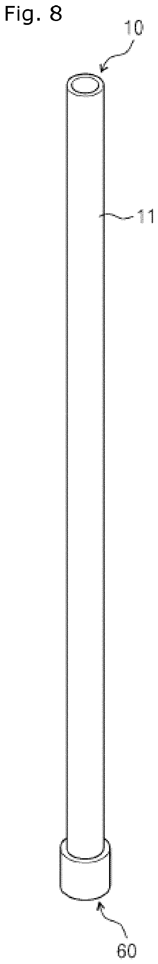

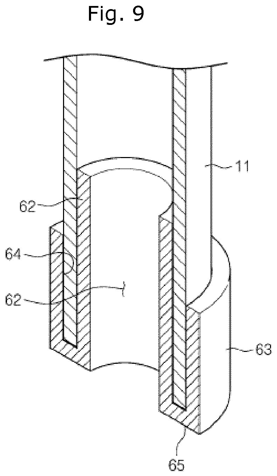

Drawing 8 is a perspective view showing a disposable straw according to the example of the seventh implementation of this invention, while drawing 9 is a perspective view showing a cap of a disposable straw according to the example of the sixth implementation of this invention.

Referring to drawings 8 and 9, caps (60) may be joined at the end of the straw (10). Cap (60) may be provided as a synthetic resin material. Cap (60) includes the inner joint (61), the outer joint (63).

The inner joint (61) is inserted into the inner part of the body (11) and the outer perimeter of the inner joint (61) is joined to the inner circumference of the body. Inside the inner joint (61), a penetration hole (62) is formed.

The inner circumference of the outer joint (63) is joined to the outer circumference of the body (11). The inner and outer joints (61 and 63) are connected by a connection (65). A body insertion hole (64) is formed between the inner joint (61) and the outer joint (63). The body (11) is fitted with the inserting hole (64).

The length of the outer joint (63) is longer than that of the inner joint (61).

The cap (60) can be combined at the end of the straw (10) to prevent closure of the opening due to deformation of the straw (10). Cap (60) is manufactured from synthetic resin and produces waste. Therefore, it is recommended that the composite resin of the cap (60) be supplied as a reusable material. Cap (60) is easy to clean and easy to reuse because the area where penetration holes (62) are formed is short.

The cap (60) may be jointed to an end or may be jointed to the both ends when two caps are provided. The cap may be reshaped fit to the shape of and applied to the each (20), (40), (40), and (50) straws of the second, the third, the fourth, and the fifth practice example respectively.

You can eat straws (10, 20, 30, 40, 50) according to the embodiments of this invention. Because after you have finished drinking (L), you can eat as if you are eating snacks or jelly. Accordingly there is no waste at all. It can also provide a sense of satisfaction for users.

## Claims

1. Disposable straw (10; 20; 30; 40; 50) that is long-drawn in length, having a body (11) formed by an opening at each end along the length, and a hole (12) formed by connecting the above opening to allow the beverage to pass along the length direction, **characterized in that** the body (11) is composed of 65-85 weight percent of rice flour and 15-35 weight percent of tapioca starch as main ingredients that can be processed.

2. Disposable straw (10; 20; 30; 40; 50) according to the preceding claim, further comprising a trace amount of salt and sugar.

3. Disposable straw (10; 20; 30; 40; 50) according to any of the preceding claims, wherein the rice flour is of an Indica variety.

4. Disposable straw (10; 20; 30; 40; 50) according to claim 1, wherein the body (11) contains edible pigments of coffee or natural fruit color.

5. Disposable straw (10; 20; 30; 40; 50) according to claim 1, wherein the body is flavoured with the scent of coffee, fruit, caramel or chocolate.

6. Disposable straw (20) according to claim 1, wherein the body forms a "8"-character cut section perpendicular to the length direction.

7. Disposable straw (30) according to claim 1, wherein the section perpendicular to the length direction of the above body is formed repeatedly with a recess (31) and a groove (32), formed along the length of the above body of the disposable straw.

8. Disposable straw (40) according to claim 1, wherein the recess part (41) and the groove part (42) are formed repeatedly in a multi-linear fashion along the length direction of the above body.

9. Disposable straw (50) according to claim 1, wherein one or more of the two ends (53, 54) according to the direction of the above length may be provided with higher thickness compared to body parts.

10. Disposable straw (50) according to claim 1, provided by re-folding one or more of the two ends according to the direction of the above length.

11. Disposable straw (10; 20; 30; 40; 50) according to claim 1, containing a cap (60) that bind to one or more of the two ends according to the direction of the above length.

12. Disposable straw (10; 20; 30; 40; 50) according to the preceding claim, wherein the above cap (60) is inserted into the inner part of the body and is joined to the inner part of the body, and the disposable straw includes an outer joint (63) that forms a penetration hole and the connection (65) between the outer part of the body and the above outer joint (63).

## Patentansprüche

1. Trinkstrohhalm (10; 20; 30; 40; 50), der lang gezogen ist, mit einem Körper (11), der durch eine Öffnung an jedem Ende entlang der Länge gebildet ist, und einem Loch (12), das durch Verbinden der Öffnung gebildet ist, damit das Getränk entlang der Längsrichtung passieren kann, **dadurch gekennzeichnet, dass** der Körper (11) aus 65 bis 85 Gewichtsprozent aus Reismehl und 15 bis 35 Gewichtsprozent Tapiokastärke als Hauptzutaten, die verarbeitet werden können, zusammengesetzt ist.

2. Trinkstrohhalm (10; 20; 30; 40; 50) nach dem vorangehenden Anspruch, ferner umfassend eine Spurenmenge von Salz und Zucker.

3. Trinktrohhalm (10; 20; 30; 40; 50) nach einem der vorhergehenden Ansprüche, wobei das Reismehl von einer Indica-Sorte ist.

4. Trinkstrohhalm (10; 20; 30; 40; 50) nach Anspruch 1, wobei der Körper (11) verzehrbare Farbzusätze von Kaffee oder natürlichen Früchten enthält.

5. Trinkstrohhalm (10; 20; 30; 40; 50) nach Anspruch 1, wobei der Körper mit dem Geschmack von Kaffee, Frucht, Karamell oder Schokolade aromatisiert ist.

6. Trinkstrohhalm (20) nach Anspruch 1, wobei der Körper einen 8-Zeichen-Ausschnitt senkrecht zur Längsrichtung bildet.

7. Trinkstrohhalm (30) nach Anspruch 1, wobei der Abschnitt senkrecht zur Längsrichtung des obigen Körpers wiederholt mit einer Aussparung (31) und einer Rille (32) ausgebildet ist, die entlang der Länge des obigen Körpers ausgebildet sind.

8. Trinkstrohhalm (40) nach Anspruch 1, wobei der Aussparungsteil (41) und der Rillenteil (42) wiederholt in einer multilinearen Weise entlang der Längsrichtung des obigen Körpers ausgebildet sind.

9. Trinkstrohhalm (50) nach Anspruch 1, wobei eines oder mehrere der beiden Enden (53, 54) entsprechend der Richtung der oben genannten Länge mit einer höheren Dicke im Vergleich zu den [restlichen] Körperteilen versehen sein können.

10. Trinkstrohhalm (50) nach Anspruch 1, bereitgestellt durch Umfalten eines oder mehrerer der beiden Enden entsprechend der Richtung der obigen Länge.

11. Trinktrohhalm (10; 20; 30; 40; 50) nach Anspruch 1, der einen Aufsatz (60) enthält, die an einem oder mehreren der beiden Enden gemäß der Richtung der oben genannten Länge bindet.

12. Trinkstrohhalm (10; 20; 30; 40; 50) nach dem vorhergehenden Anspruch, wobei der obige Aufsatz (60) in den inneren Teil des Körpers eingesetzt und mit dem inneren Teil des Körpers verbunden ist, und der Trinkstrohhalm umfasst ein äußeres Gelenk (63), das ein Durchgangsloch und die Verbindung (65) zwischen dem äußeren Teil des Körpers und dem obigen äußeren Gelenk (63) bildet.

## Revendications

1. Paille jetable (10 ; 20 ; 30 ; 40 ; 50) étirée en longueur, ayant un corps (11) formé par une ouverture à chaque extrémité sur la longueur, et un trou (12) formé en reliant l'ouverture du dessus pour permettre à la boisson de passer dans le sens de la longueur, **caractérisé en ce que** le corps (11) est composé de 65 à 85 % en poids de farine de riz et de 15 à 35 % en poids d'amidon de tapioca en tant qu'ingrédients principaux pouvant être transformés.

2. Paille jetable (10 ; 20 ; 30 ; 40 ; 50) selon la revendication précédente, comprenant en outre des traces de sel et de sucre.

3. Paille jetable (10 ; 20 ; 30 ; 40 ; 50) selon l'une des revendications précédentes, dans laquelle la farine de riz est d'une variété Indica.

4. Paille jetable (10 ; 20 ; 30 ; 40 ; 50) selon la revendication 1, dans laquelle le corps (11) contient des pigments comestibles de couleur café ou fruit naturel.

5. Paillette jetable (10 ; 20 ; 30 ; 40 ; 50) selon la revendication 1, dans laquelle le corps est parfumé au parfum de café, de fruit, de caramel ou de chocolat.

6. Paillette jetable (20) selon la revendication 1, dans laquelle le corps forme une section découpée en « 8 » perpendiculaire à la direction de la longueur.

7. Paille jetable (30) selon la revendication 1, dans laquelle la section perpendiculaire à la direction de la longueur du corps ci-dessus est formée de manière répétée avec un évidement (31) et une rainure (32), formés suivant la longueur du corps ci-dessus de la paille jetable.

8. Paille jetable (40) selon la revendication 1, dans laquelle la partie évidée (41) et la partie rainure (42) sont formées de façon répétée d'une manière multilinéaire le long de la direction longitudinale dudit corps.

9. Paille jetable (50) selon la revendication 1, comprenant une ou plusieurs des deux extrémités (53, 54) selon la direction de ladite longueur peut être pourvue d'une épaisseur supérieure par rapport aux parties du corps.

10. Paille jetable (50) selon la revendication 1, réalisée en repliant une ou plusieurs des deux extrémités selon la direction de ladite longueur.

11. Paille jetable (10 ; 20 ; 30 ; 40 ; 50) selon la revendication 1, contenant un capuchon (60) qui se lie à une ou plusieurs des deux extrémités selon le sens de la longueur ci-dessus.

12. Paille jetable (10 ; 20 ; 30 ; 40 ; 50) selon la revendication précédente, dans laquelle ledit capuchon (60) est inséré dans la partie interne du corps et est joint à la partie interne du corps, et la paille jetable comprend un joint externe (63) qui forme un trou de pénétration et la connexion (65) entre la partie externe du corps et ledit joint externe (63).
